# EUROPÄISCHE PATENTANMELDUNG

(11) **EP 1 426 205 A2**
(43) Veröffentlichungstag der Anmeldung: **09.06.2004**
(21) Anmeldenummer: 03026715.7
(22) Anmeldetag: 21.11.2003
(51) Int. Cl.: B60G 9/02, B60G 17/015, B66F 17/00

(54) **Vierradflurförderzeug mit Pendelachse**

(30) Priorität: 04.12.2002 DE 10256539
(71) Anmelder: Jungheinrich Aktiengesellschaft, 22047 Hamburg (DE)
(72) Erfinder: Rickers, Paul, Dipl.-Ing., 22844 Norderstedt (DE)
(74) Vertreter: Patentanwälte Hauck, Graalfs, Wehnert, Döring, Siemons, Schildberg

(57) **Zusammenfassung**

Vierradflurförderzeug (10) mit einer Pendelachse (14) für die Hinterräder, einem Antrieb und einer Steuervorrichtung für den Antrieb, die nach Maßgabe eines Gebersignals ein Stellsignal für den Antrieb erzeugt, wobei am Aufbau des Flurförderzeugs (10) ein Anschlag (28,30) vorgesehen ist, der mit dem Körper der Pendelachse (14) zusammenwirkt, dadurch gekennzeichnet, daß am Achsanschlag (28,30) ein Schalter angeordnet ist und der Schalter mit der Steuervorrichtung so gekoppelt ist, daß das Antriebsmoment des Antriebs verringert wird, wenn der Schalter betätigt wird.

## Beschreibung

Die Erfindung bezieht sich auf ein Vierradflurförderzeug mit einer Pendelachse nach dem Oberbegriff des Patentanspruchs 1.

Bei schnellem Durchfahren enger Kurven kann das aus der Fliehkraft resultierende seitliche Kippmoment bei derartigen Fahrzeugen größer werden als das Standmoment, und das Fahrzeug kippt um. Aus EP 0 483 493 ist bekannt geworden, eine Warneinrichtung für das Flurförderzeug vorzusehen einschließlich einer Überwachungseinrichtung für den Belastungszustand. Das auf das Fahrzeug wirkende Lastmoment und die aktuelle Konstellation des Fahrzeugs werden sensiert. Anhand dieser Daten werden instabile Zustände bestimmt und dem Fahrer signalisiert.

Aus EP 0 796 749 ist bekannt, die Pendelachse bei drohender Instabilität zu blockieren. Die Blockade ist abhängig von der sensierten oder berechneten Winkelgeschwindigkeitsrate des Fahrzeugs.

Aus DE 101 18 442 A1 ist bekannt geworden, einen Sensor, vorzugsweise am Fahrzeugrahmen bzw. -aufbau vorzusehen, der den Abstand des Fahrzeugrahmens von der Pendelachse sensiert. Erreicht dieser Abstand einen vorgegebenen unteren bzw. vorgegebenen oberen Wert, wird ein entsprechendes Korrektur- und Warnsignal erzeugt. Wird auf jeder Seite der Pendelachse ein Sensor angeordnet, bildet jeweils ein unterer Abstandswert die Ansprechgrenze. Zusätzlich ist aus der Druckschrift bekannt, am Fahrzeugrahmen einen weiteren Sensor vorzusehen, vorzugsweise im Bereich der Vorderachse, der den Abstand des Rahmens vom Untergrund mißt.

Unter zufriedenstellenden Umgebungsbedingungen läßt sich eine Abstandsmessung der beschriebenen Art und Weise ohne weiteres durchführen mit Hilfe von kontaktlos arbeitenden optischen, induktiven oder akustischen Sensoren. Der Betrieb eines Flurförderzeugs ist rauhen Bedingungen ausgesetzt. Daher sind Sensoren der beschriebenen Art gefährdet, und es besteht die Gefahr, daß bei drohender Instabilität keine Meldung erfolgt.

Aus WO 79/00330 ist bekannt geworden, die Neigung eines Mastes mit einem Lastaufnahmemittel relativ zum Untergrund zu detektieren, beispielsweise mit Hilfe eines Potentiometers. Der gemessene Winkel wird dem Fahrer angezeigt, und der Fahrer des Flurförderzeugs kann die Lage des Lastaufnahmemittels durch entsprechendes Kippen des Mastes korrigieren. Aus DE 199 19 655 A1 ist ferner bekannt geworden, bei einem Flurförderzeug mindestens einem Rad einen Lastsensor zuzuordnen. Eine Sicherheitseinrichtung weist eine Vergleichseinrichtung auf, die ein Signal auf einen Warnsignalgeber gibt, wenn eine oder mehrere der gemessenen Radlasten einen vorgegebenen Wert unterschreiten. Dadurch soll eine Instabilität bzw. die Annäherung an die Instabilität des Fahrzeugs rechtzeitig erkannt werden, um dieser entgegenzuwirken. Die Sensorsignale können auf eine oder mehrere Funktionen eines Flurförderzeugs einwirken, nämlich auf die Höhe der Last, den Lenkeinschlag, die Geschwindigkeit des Fahrzeugs, die Mastneigung, die Verschiebung des Lastaufnahmemittels in Richtung der Längsachse und oder auch quer dazu, auf die Höheneinstellung eines oder mehrerer Stoßdämpfer oder dergleichen. Ferner kann eine Stabilisierungseinrichtung vorgesehen und entsprechend aktiviert werden.

Der Erfindung liegt die Aufgabe zugrunde, ein Vierradflurförderzeug mit Pendelachse zu schaffen, bei dem mit großer Sicherheit ein Kippen vermieden wird.

Diese Aufgabe wird durch die Merkmale des Patentanspruchs 1 oder des Patentanspruchs 2 gelöst.

Fahrzeuge mit Pendelachse weisen auf gegenüberliegenden Seiten der Achse am Aufbau bzw. am Rahmen einen sogenannten Achsanschlag auf. Bei einer entsprechenden Neigung des Aufbaus relativ zur Achse legt sich der kurvenäußere Anschlag gegen den Achskörper und verhindert, daß der Aufbau gegenüber das Achse noch weiter verschwenkt wird. Hierdurch ist eine gewisse Sicherheit gegenüber dem Kippen gegeben. Der Achsanschlag ist üblicherweise so angeordnet, daß bei Kurvenfahrt das Fahrzeug erst dann kippt, wenn das Kippmoment größer wird als dasjenige, das zum Anschlagen des Achsanschlags am Achskörper führt. Diese Tatsache wird bei der Erfindung genutzt. Im Achsanschlag ist ein Schalter vorgesehen, der betätigt wird, wenn der Achsanschlag den Achskörper berührt. Durch den Schalter wird ein Signal auf die Antriebssteuerung gegeben, welche daraufhin das Antriebsmoment reduziert. Auf diese Weise wird dafür gesorgt, daß die Umstände, die die Instabilität herbeiführen, beseitigt werden.

Bei der erfindungsgemäßen Lösung nach Patentanspruch 2 ist in der Rotationsebene der Pendelachse ein Drehgeber angeordnet, der mit der Steuervorrichtung so gekoppelt ist, daß das Antriebsmoment des Antriebs verringert wird, wenn das Signal des Drehgebers einen vorgegebenen Wert erreicht. Ein derartiger Drehgeber kann geschützt im Bereich der Pendelachse untergebracht werden und wird durch den rauhen Betrieb des Flurförderzeugs in seiner Funktion nicht eingeschränkt oder behindert.

Es ist bekannt, vierrädrige Flurförderzeuge mit zwei angetriebenen Rädern zu versehen. Es ist ferner bekannt, jedes angetriebene Rad mit einem eigenen Antriebsmotor zu koppeln. Bei der Erfindung ist die Steuervorrichtung so ausgelegt, daß bei Empfang eines Schaltersignals oder eines Signals vom Drehgeber jeweils der Antrieb für das kurvenäußere Rad in seinem Drehmoment reduziert wird. Der Antrieb für das kurveninnere Rad braucht nicht angesteuert zu werden, da es in dem instabilnahen Bereich kaum zur Traktion beiträgt.

Es ist bekannt, Flurförderzeuge mit einer Bremse zu versehen, beispielsweise einer Bremsanlage, die in den Antriebsmotor integriert ist. Erfindungsgemäß kann zusätzlich zur Beeinflussung des Antriebsmomentes ein Bremsmoment auf das Flurförderzeug gegeben werden, um dem instabilen Zustand noch stärker entgegenzuwirken. Wird von der Bremssteuervorrichtung jedes angetriebene Rad separat angesteuert, kann im Falle des Nahens eines instabilen Zustands die Bremsvorrichtung für das kurvenäußere Rad angesteuert werden. Das Bremsmoment kann im übrigen auch durch generatorischen Betrieb eines elektrischen Antriebsmotors erzeugt werden.

Die Erfindung wird nachfolgend anhand eines in Zeichnungen dargestellten Ausführungsbeispiels näher erläutert.
- Fig. 1: zeigt schematisch die Endansicht eines vierrädrigen Flurförderzeugs mit Pendelachse bei Geradeausfahrt,
- Fig. 2: zeigt die gleiche Ansicht wie Fig. 1, jedoch bei einer Neigung des Aufbaus in Folge einer Kurvenfahrt.

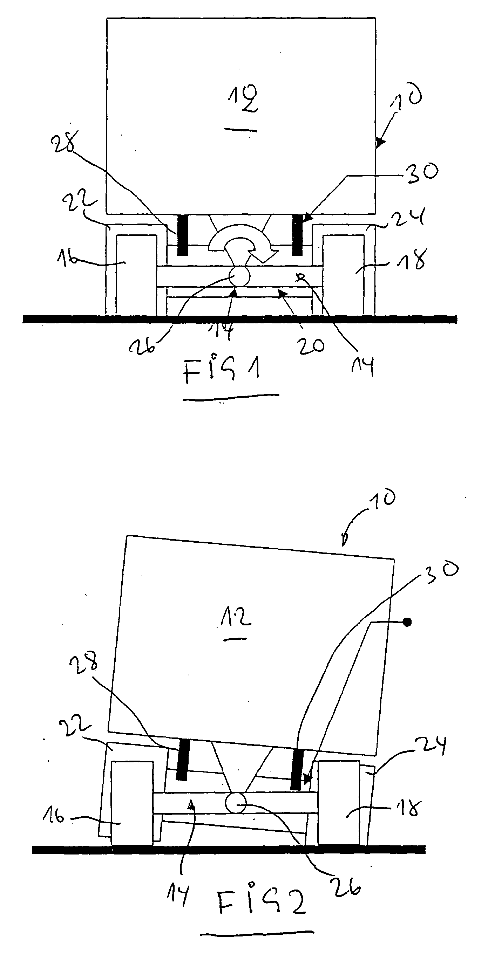

In Fig. 1 und 2 ist ein Flurförderzeug 10 schematisch dargestellt mit einem Aufbau 12, einer Pendelachse 14 mit den zugehörigen Rädern 16, 18 und einer Vorderachse 20 mit den angetriebenen Vorderrädern 22, 24. Ein Pendellager ist bei 26 zu erkennen.

Auf beiden Seiten des Pendellagers 26 sind Achsanschläge 28, 30 am Aufbau 12 angebracht. Bei Geradeausfahrt gemäß Fig. 1 haben die Achsanschläge 28, 30 einen Abstand von der Pendelachse 14. Neigt sich der Aufbau 12 bei einer engen Kurvenfahrt zur einen Seite, wie in Fig. 2 dargestellt, kommt einer der beiden Anschläge mit der Pendelachse 14 in Berührung, wenn ein bestimmter Neigungswinkel überschritten wird. Üblicherweise ist das Fahrzeug so ausgelegt, daß bei Berührung eines Anschlags mit der Pendelachse der instabile Zustand noch nicht erreicht ist, es vielmehr noch einer höheren Zentrifugalkraft bedarf, um den instabilen Zustand zu erreichen, obwohl das kurveninnere Vorderrad, wie in Fig. 2 dargestellt, schon vom Untergrund abhebt.

An den Achsanschlägen 28, 30 sind nicht gezeigte Schalter angebracht, die betätigt werden, wenn der entsprechende Achsanschlag mit dem Achskörper in Berührung tritt. Die Schalter sind mit einer nicht gezeigten Steuerung für den nicht gezeigten Antrieb der Räder 22, 24 verbunden, um zu bewirken, daß das Antriebsmoment des Antriebsmotors verringert wird, wenn einer der Schalter anspricht. Ist jedes Rad 22, 24 von einem getrennten Antriebsmotor angetrieben, reduziert lediglich der Antriebsmotor für das kurvenäußere Rad - hier für das Rad 24 - das Antriebsmoment, um zu verhindern, daß der instabile Zustand erreicht wird.

Es ist auch denkbar, im Bereich des Pendellagers 26 einen Drehgeber anzuordnen, der die Neigung des Aufbaus 12 relativ zur Pendelachse 14 mißt und ein entsprechendes Signal auf die Steuerung des Antriebs gibt. Zusätzlich können das Signal des Drehgebers oder die Signale der nicht gezeigten Schalter auf eine Bremssteuerung gegeben werden, um bei Herannahen des instabilen Zustands ein Bremssignal zu erzeugen, wodurch der stabile Zustand des Fahrzeugs rasch wieder erreicht wird.

## Patentansprüche

1. Vierradflurförderzeug mit einer Pendelachse für die Hinterräder, einem Antrieb und einer Steuervorrichtung für den Antrieb, die nach Maßgabe eines Gebersignals ein Stellsignal für den Antrieb erzeugt, wobei am Aufbau des Flurförderzeugs ein Anschlag vorgesehen ist, der mit dem Körper der Pendelachse zusammenwirkt, **dadurch gekennzeichnet, daß** am Achsanschlag (28, 30) ein Schalter angeordnet ist und der Schalter mit der Steuervorrichtung so gekoppelt ist, daß das Antriebsmoment des Antriebs verringert wird, wenn der Schalter betätigt wird.

2. Vierradflurförderzeug mit einer Pendelachse für die Hinterräder, einem Antrieb und einer Steuervorrichtung für den Antrieb, die nach Maßgabe eines Gebersignals ein Stellsignal für den Antrieb erzeugt, wobei am Aufbau des Flurförderzeugs ein Anschlag vorgesehen ist, der mit dem Körper der Pendelachse zusammenwirkt, **dadurch gekennzeichnet, daß** in der Rotationsebene der Pendelachse (14) ein Drehgeber angeordnet ist, der mit der Steuervorrichtung so gekoppelt ist, daß das Antriebsmoment des Antriebs verringert wird, wenn das Signal des Drehgebers einen vorgegebenen Wert erreicht.

3. Vierradflurförderzeug nach Anspruch 1 oder 2, wobei das Flurförderzeug für jedes angetriebene Rad einen Antriebsmotor aufweist, **dadurch gekennzeichnet, daß** die Steuervorrichtung das Antriebsmoment desjenigen Antriebsmotors verringert, welcher das jeweils kurvenäußere Rad antreibt.

4. Vierradflurförderzeug nach einem der Ansprüche 1 bis 3, wobei das Flurförderzeug eine durch eine Bremssteuervorrichtung gesteuerte Bremsvorrichtung aufweist, **dadurch gekennzeichnet, daß** das Signal des Schalters oder des Drehgebers auf die Bremsteuervorrichtung gegeben wird daher, daß ein Bremsmoment erzeugt wird, wenn der Schalter anspricht oder das Drehgebersignal einen vorgegebenen Wert erreicht.

5. Vierradflurförderzeug nach Anspruch 4, **dadurch gekennzeichnet, daß** die bremsbaren Räder getrennt von der Bremssteuervorrichtung ansteuerbar sind und die Bremsteuervorrichtung das jeweils kurvenäußere Rad bremst, wenn es ein Signal vom Schalter oder vom Drehgeber erhält.
